# EUROPÄISCHE PATENTSCHRIFT

(11) **EP 1 512 883 B1**
(45) Veröffentlichungstag und Bekanntmachung des Hinweises auf die Patenterteilung: **11.06.2008**
(21) Anmeldenummer: 04104144.3
(22) Anmeldetag: 30.08.2004
(51) Int. Cl.: F16F 9/084, F16F 9/04

(54) **Dämpferanordnung, insbesondere Luftfederbein, und Hohlkörper zur Verwendung in dieser Anordnung**
Damper assembly, in particular an air spring strut, and hollow body used in this assembly
Ensemble amortisseur, en particulier une jambe de ressort pneumatique, et corps creux utilisé dans cet ensemble

(30) Priorität: 05.09.2003 DE 10341003
(43) Veröffentlichungstag der Anmeldung: 09.03.2005
(73) Patentinhaber: Voss Automotive GmbH, 51688 Wipperfürth (DE)
(72) Erfinder: Borgmeier, Olav, 51688, Wipperfürth (DE); Dresen, Dirk, 51688, Wipperfürth (DE)
(74) Vertreter: Patentanwälte Dr. Solf & Zapf

(56) Entgegenhaltungen:
- EP-A- 0 403 447
- DE-A- 10 236 621
- DE-U- 1 869 264
- GB-A- 986 327

## Beschreibung

Die vorliegende Erfindung betrifft eine Dämpferanordnung, insbesondere ein Luftfederbein, umfassend einen ein im wesentlichen zylindrisches Gehäuse aufweisenden Stoßdämpfer und eine Luftfeder mit einem unter Innendruck stehenden Arbeitsraum und umfassend ein Zusatzvolumen, das dem Arbeitsraum über einen verschließbaren Strömungskanal zuschaltbar ist nach dem Oberbegriff des Anspruchs 1. Des Weiteren betrifft die Erfindung einen Hohlkörper nach dem Oberbegriff des Anspruchs 19 zur Verwendung in dieser Anordnung.

Luftfederbeine werden zur Stoß- und Schwingungsdämpfung in Kraftfahrzeugen eingesetzt, wobei sie charakteristischerweise eine Luftfeder und einen parallel geschalteten Stoßdämpfer umfassen. So ist aus der DE 199 03 553 C2 ein Luftfederbein bekannt, bei dem die Abstützung einer Innenführung eines Luftfederbalges an einem Zylindergehäuse eines Stoßdämpfers und am Rand eines Anschlagtopfes erfolgt, der mit dem Zylindergehäuse verbunden ist und als Anschlag für einen Puffer dient, der beim Überschreiten eines Grenzwertes der Verschiebung der Kolbenstange des Stoßdämpfers zur Anlage an das Zylindergehäuse kommt. Die Innenführung wird dabei an den Anbindungspunkten des Luftfederbalges mit radialen und axialen Kräften beaufschlagt. Gemäß der DE 199 03 553 C2 stützt sich die Innenführung unmittelbar am Zylindergehäuse ab, wodurch sich eine steife Abstützung ergibt. Der Anschlagtopf, dessen Verformungen nicht mit der Abstützung der Innenführung gekoppelt sind, kann einen Verbindungskanal zum Arbeitsraum der Luftfeder aufweisen, der dem Druckausgleich dient, er stellt aber kein zuschaltbares Zusatzvolumen für die Luftfeder dar, durch das die Federcharakteristik verändert werden kann.

In der DE 199 40 198 C1 ist ein Verfahren zur Regelung eines Systems, insbesondere für Kraftfahrzeuge, beschrieben das eine Luftfeder enthält, die ein Luftvolumen umschließt, und das des Weiteren einen dazu parallel geschalteten regelbaren Stoßdämpfer aufweist, sowie auch ein Zusatzvolumen, mit dem das Luftvolumen der Luftfeder über eine regelbare Drossel in Verbindung steht. Das bekannte System stellt somit eine Anordnung der eingangs genannten Art dar. Das Verfahren umfaßt folgende Verfahrensschritte: - Es wird eine Gesamtdämpfung des Systems und eine Federsteifigkeit der Luftfeder vorgegeben, - der Drosselwiderstand der Drossel, über die das Luftvolumen der Luftfeder mit dem Zusatzvolumen verbunden ist, wird so eingestellt, daß die Luftfeder die vorgegebene Federsteifigkeit aufweist, - frequenzabhängig wird die Größe der Dämpfung bestimmt, die an der Drossel, über die das Luftvolumen der Luftfeder mit dem Zusatzvolumen verbunden ist, entsteht, - der regelbare Stoßdämpfer wird so eingestellt, daß die Summe der in dem Stoßdämpfer entstehenden Dämpfung und der zwischen dem Luftvolumen der Luftfeder und dem Zusatzvolumen entstehenden Dämpfung weitestgehend der Gesamtdämpfung entspricht. Die DE 199 40 198 C1 beschreibt in schematischer Form den Gesamtaufbau der Anlage, zeigt jedoch keine konkreten konstruktiven Details.

Die EP 403 447 A1 beschreibt eine Anordnung mit einem Stoßdämpfer, die jedoch keinen Hohlkörper im Sinne der Erfindung aufweist, der in der Dämpferanordnung zusätzlich zum Stoßdämpfer vorhanden wäre, sondern nur über einen Hohlraum verfügt, der einerseits innen durch die Dämpferwandung und andererseits außenseitig durch ein aufgelegtes konisches Rohrstück - ein starres Gehäuse bildend - ausgeführt ist. Dabei ist ein Ende des inneren rohrförmigen Körpers, der den Hohlraum bildet, mit dem Gehäuseende verbunden, während zwischen dem anderen Gehäuseende und dem Dämpferrohr ein Ventil angeordnet ist.

Eine Dämpferanordnung der eingangs genannten Art ist in der GB 986 327 A beschrieben. Diese umfasst einen ein im Wesentlichen zylindrisches Gehäuse aufweisenden Stoßdämpfer und eine Luftfeder mit einem unter Innendruck stehenden Arbeitsraum und sowie ein Zusatzvolumen, das mit dem Arbeitsraum über einen Strömungskanal verbunden und von einem den Stoßdämpfer umgebenden Hohlkörper umschlossen ist, der aus einem Außenzylinder und einem mit diesem verbundenen, insbesondere konzentrisch angeordneten, Innenzylinder gebildet ist. Bei dem in der GB 986 327 A beschriebenen Hohlkörper ist ein Ende des Innenzylinders an der Wand des Außenzylinders befestigt. Das innere Hohlkörperteil ist dabei rohrförmig ausgebildet, während das äußere Hohlkörperteil eine Glockenform besitzt und endseitig einen ringförmigen Überstand aufweist, der das frei ragende Ende des inneren Hohlkörperteils übergreift. Das äußere Hohlkörperteil ist mit seinem Ende unter bevorzugter Zwischenlage einer Dichtung direkt auf dem Stoßdämpfer aufgelötet oder -geschweißt.

Der vorliegenden Erfindung liegt die Aufgabe zugrunde, eine Dämpferanordnung der eingangs genannten Art zu schaffen, die sich durch ein geringes Gewicht und eine im Aufwand verringerte Herstellungsweise auszeichnet.

Erfindungsgemäß wird dies dadurch erreicht, daß das Zusatzvolumen über den verschließbar ausgebildeten Strömungskanal dem Arbeitsraum zuschaltbar ist, wobei der Außenzylinder und/oder der Innenzylinder des Hohlkörpers aus metallischen Rohrstücken gebildet ist/sind, deren beidseitige Enden zur Bildung des Hohlkörpers miteinander verbunden sind, und daß zwischen den Enden jeweils in der Wandung des Außenzylinders und/oder des Innenzylinders durch Hydroformen oder Warmeinziehen mittels Rollieren über eine Länge des Hohlkörpers erzeugte variable Änderungen der Radien zur Einstellung der Größte des Zusatzvolumens und zur Aufnahme, Lagerung, Halterung oder Ausbildung mindestens eines Distanzstücks eines Überströmventils, eines Ventilsitze, einer Umfangsdichtung und/oder des Gehäuses des Stoßdämpfers, wie am Außenzylinder ein radial nach innen gerichtetes Wandstück, eine radial nach außen gerichtete nutartige Wellung, am Innenzylinder ein radial nach innen gewölbter Bereich, eine Einschnürung und/oder ein radial nach außen gerichteter Wandrücksprung, ausgebildet sind.

Der Außenzylinder und/oder der Innenzylinder eines solchen Hohlkörpers kann in fertigungstechnisch wenig aufwendiger Weise durch Hydroformen oder durch Warmeinziehen mittels Rollieren von metallischen Rohrstücken hergestellt werden. So beschreibt die DE 44 03 897 C1 ein dazu bevorzugt anwendbares Verfahren zum Warmeinziehen der Enden von hohlen Werkstücken mittels Rollieren, bei dem das Werkstück in Drehung versetzt wird, das zu bearbeitende Ende auf eine vorgewählte Temperatur vorgewärmt wird und stufenweise ein Drückwerkzeug zugestellt wird, wobei im Angriffsbereich des Drückwerkzeugs eine gezielte auf den Angriffsbereich begrenzte Erwärmung des Werkstücks auf die Umformtemperatur erfolgt. Bei einer Bei einer solchen Umformung werden die Zylinder ohne innenliegende Matrizen oder Stempel nur gegen die materialeigenen Kräfte umgeformt, was vorteilhafterweise auch die Herstellung hinterschnittener Geometrien ermöglicht. Durch eine mögliche Kombination einer zerspanenden Feinbearbeitung mit der Warmbehandlung und dem Formen, ist nur eine einmalige Aufspannung des Werkstücks notwendig, wodurch sich eine schnelle, genaue und wenig aufwendige Fertigung ergibt. Nach der Formgebung können die axialen, insbesondere rohrförmigen, Enden des Außenzylinders und des Innenzylinders zur Bildung des Hohlkörpers, insbesondere kraft- und/oder stoffschlüssig, miteinander verbunden werden. Der Hohlkörper kann dann form- und/oder kraftschlüssig am Gehäuse des Stoßdämpfers befestigt werden.

Weitere vorteilhafte Ausgestaltungsmerkmale der Erfindung sind in den Unteransprüchen sowie der folgenden Beschreibung enthalten.

Anhand zweier bevorzugter Ausführungsbeispiele soll im folgenden die Erfindung näher erläutert werden. Dabei zeigt
- Fig. 1: einen axialen Halbschnitt durch eine erste Ausführung einer erfindungsgemäßen Dämpferanordnung,
- Fig. 2: eine perspektivische Darstellung eines alternativ zu Fig. 1 ausgeführten Details einer erfindungsgemäßen Dämpferanordnung im Bereich eines Strömungskanals,
- Fig. 3: eine Fig. 2 entsprechende Darstellung mit einer weiteren alternativen Detaildarstellung,
- Fig. 4: einen axialen Halbschnitt durch eine zweite Ausführung einer erfindungsgemäßen Dämpferanordnung.

In den verschiedenen Figuren der Zeichnung sind identische und gleichartige Teile auch mit den gleichen Bezugszeichen versehen, so daß sie in der Regel auch jeweils nur einmal beschrieben werden.

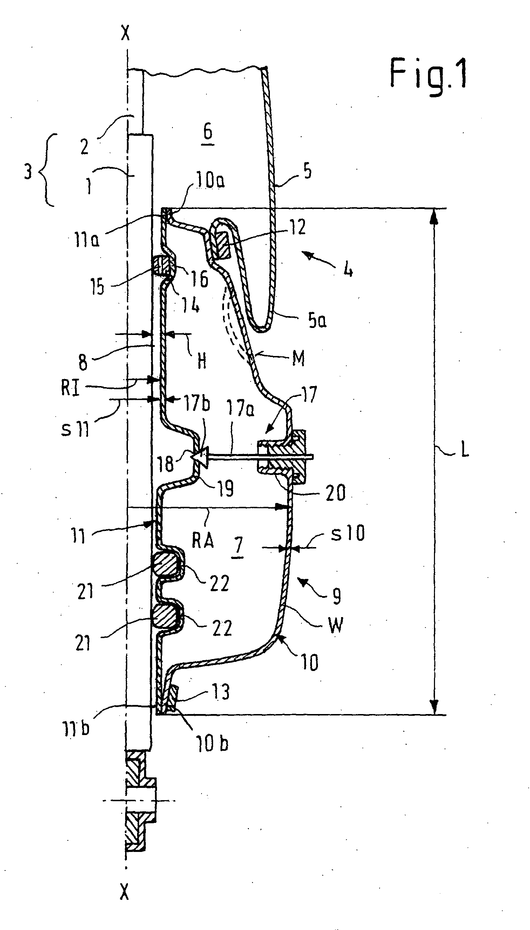

Wie sich zunächst aus Fig. 1 ergibt, umfaßt eine erfindungsgemäße Dämpferanordnung, bei der es sich insbesondere um ein Luftfederbein für ein Kraftfahrzeug handeln kann, einen ein im wesentlichen zylindrisches Gehäuse 1 und eine Kolbenstange 2 aufweisenden Stoßdämpfer 3 sowie eine Luftfeder 4 mit einer als Rollbalg 5 ausgebildeten, insbesondere aus einem Elastomer bestehenden, biegsamen Wand, die einen unter Innendruck stehenden Arbeitsraum 6 begrenzt. Des Weiteren umfaßt die Dämpferanordnung ein Zusatzvolumen 7, das dem Arbeitsraum 6 über einen verschließbaren Strömungskanal 8 zuschaltbar ist.

Das Zusatzvolumen 7 ist von einem den Stoßdämpfer 3 umgebenden Hohlkörper 9 umschlossen, dessen Wandung W einen Außenzylinder 10 und einem mit diesem verbundenen konzentrisch zur Längsachse X-X angeordneten Innenzylinder 11 umfaßt bzw. - wie dargestellt - vollständig daraus gebildet ist.

Wie bereits erwähnt, können der Außenzylinder 10 und/oder der Innenzylinder 11 des Hohlkörpers 9 bevorzugt durch Hydroformen oder durch Warmeinziehen mittels Rollieren von metallischen Rohrstücken gebildet sein. Dies gestattet es vorteilhafterweise auch, über eine entsprechende Gestaltung der Verläufe des Radius RI des Innenzylinders 11 und des Radius RA des Außenzylinders 10 über die Länge L des Hohlkörpers 9 die Größe des Zusatzvolumens 7 bei der Fertigung in weiten Grenzen variabel einzustellen. Der, insbesondere aus Metall bestehende, Außenzylinder 10 und/oder der, ebenfalls insbesondere aus Metall bestehende, Innenzylinder 11 können dabei zur Ermöglichung dieser Fertigung und zur Erzielung eines vorteilhaften Masse-Leistungs-Verhältnisses eine Wandstärke s10, s11 von 0,5 mm bis 4,8 mm aufweisen, wie diese für Fein- und Mittelblech charakteristisch ist.

Die axialen, insbesondere rohrförmigen, Enden 10a, 10b des Außenzylinders 10 und die Enden 11a, 11 b des Innenzylinders 11 können zur Bildung des Hohlkörpers 9, insbesondere kraft- und/oder stoffschlüssig, miteinander verbunden sein, wobei die Radien RI, RA der Zylinder 10, 11 auf derartige Werte eingestellt werden können, daß eine unmittelbare Verbindung der Enden 10a/11 a, 10b/11 b möglich ist.

Zur Befestigung des Hohlkörpers 9 kann eine form- und/oder kraftschlüssige Halterung der aneinander anliegenden bzw. verbundenen Enden 10a/11a, 10b/11b und/oder des äußeren Mantels M des Hohlkörpers 9 direkt oder indirekt am Gehäuse 1 des Stoßdämpfers 3 vorgesehen sein, wie beispielsweise durch die in Fig. 1 dargestellten Crimpringe 12, 13. Der eine Crimpring 12 dient dabei vorteilhafterweise gleichzeitig dazu, den Rollbalg 5 der Luftfeder 4 einendig am Mantel M des Außenzylinder 10 des Hohlkörpers 9 zu befestigen.

Der Arbeitsraum 6 der Luftfeder 4 umgibt in dieser Anordnung den Stoßdämpfer 3, wobei der Hohlkörper 9 in axialer Richtung X-X des Stoßdämpfers 3 unterhalb des Arbeitsraumes 6 der Luftfeder 4 angeordnet ist. Der Mantel M des Außenzylinders 10 des Hohlkörpers 9 bildet dabei eine insbesondere konisch verlaufende Gleitfläche für eine Rollfalte 5a des Rollbalgs 5. Der Druck der dabei durch die Rollfalte 5a auf die dünnwandige Gleitfläche des Mantels M wirkt, wird dabei durch den Innendruck des Zusatzvolumens 7 kompensiert, so daß eine Verformung der Wandung W, wie sie in Fig. 1 an der entsprechenden Stelle mit einer Strichlinie angedeutet ist, nicht eintreten kann.

Der Strömungskanal 8 der erfindungsgemäßen Dämpfungsanordnung ist vorteilhafterweise durch einen Ringspalt zwischen dem Gehäuse 1 des Stoßdämpfers 3 und dem Innenzylinder 11 des Hohlkörpers 9 gebildet. Der Innenzylinder 11 ist zu diesem Zweck in seinem Radius RI um eine Höhe H des Strömungskanals 8 vergrößert. Dadurch entfällt die Notwendigkeit, ein zusätzliches Bauteil zu diesem Zweck einzusetzen. Zur Stabilisierung des Strömungskanals 8 kann es dabei vorgesehen sein, daß im Ringspalt zwischen dem Gehäuse 1 des Stoßdämpfers 3 und dem Innenzylinder 11 des Hohlkörpers 9 mindestens ein Distanzstück 14 angeordnet ist. Das Distanzstück 14 kann insbesondere ringförmig ausgebildet sein und - wie dargestellt - in axialer Richtung X-X verlaufende Luftdurchtrittsöffnungen 15 aufweisen. Der Innenzylinder 11 des Hohlkörpers 9 kann dabei zur Bildung einer Halterung für das Distanzstück 14 einen radial nach außen gerichteten nutartigen Wandrücksprung 16 aufweisen.

Zum Öffnen und Verschließen des Strömungskanals 8, um das Zusatzvolumen 7 zu- oder abschaltbar zu gestalten, kann ein Überströmventil 17 vorgesehen sein. Dabei kann in vorteilhafter Ausbildung der Innenzylinder 11 des Hohlkörpers 9 einen Ventilsitz 18 für dieses Überströmventil 17 aufweisen, wobei am Innenzylinder 11 zur Bildung des Ventilsitzes 18 eine radial nach außen gerichtete Wölbung 19 ausgeformt sein kann.

Das Überströmventil 17 kann einen Stößel 17a aufweisen, an dem ein Ventilkegel 17b oder ein ähnlicher Verschlußkörper sitzt. Der Stößel 17a kann dabei den Hohlkörper 9 insbesondere in radialer Richtung quer zur Längsachse X-X durchgreifen und der im Außenzylinder 10 des Hohlkörpers 9 gelagert sein. Der Querschnitt des Hohlkörpers 9 kann im Durchgriffsbereich des Stößels 17a - insbesondere durch die genannte Wölbung 19 - mit Vorteil kleiner gestaltet werden als in anderen Bereichen des Hohlkörpers 9. Zur Lagerung des Stößels 17a kann der Außenzylinder 11 des Hohlkörpers 9 eine nicht näher bezeichnete Aufnahmeöffnung aufweisen, die insbesondere von einem mit einem Gewinde versehenen, radial nach innen gerichteten Wandstück 20 des Außenzylinders 10 umgeben ist.

In einem Bereich außerhalb des Strömungskanals 8 kann der Innenzylinder 11 unmittelbar am Gehäuse 1 des Stoßdämpfers 3 anliegen. Hierbei ist es von Vorteil, wenn der Innenzylinder 11 des Hohlkörpers 9 zur Bildung mindestens einer Aufnahme - im dargestellten Fall sind es zwei - für eine - Umfangsdichtung 21 bzw. mehrere Umfangsdichtungen 21 mindestens eine radial nach außen gerichtete nutartige Wellung 22 aufweist.

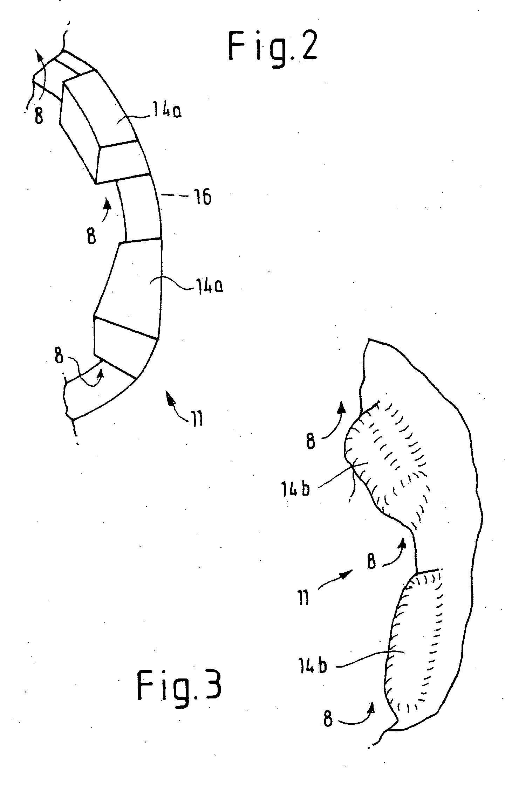

Die Erfindung ist nicht auf das in Fig. 1 dargestellte Ausführungsbeispiel beschränkt, sondern umfaßt auch alle im Sinne der Erfindung gleichwirkenden Ausführungen. So ist es z.B. möglich, wie Fig. 2 zeigt, anstelle eines einzigen ringförmigen Distanzstücks 14 mehrere segmentierte Distanzstücke 14a vorzusehen, die dann keine Luftdurchtrittsöffnungen 15 aufzuweisen brauchen. Die Befestigung des Hohlkörpers 9 kann auch auf andere als die in Fig. 1 dargestellte Weise - zum Beispiel durch eine Verschraubung - vorgenommen werden. Auch ein in axialer Richtung X-X stirnseitiger Verschluß des Hohlkörpers 9, für den die beiden Zylinder 10, 11 nicht - wie wegen der Eine andere Möglichkeit besteht auch darin, anstelle von Distanzstücken 14, 14a im Bereich des Strömungskanals 8 sickenartige, radial nach innen gewölbte Bereiche 14b am Innenzylinder 11 vorzusehen, wie dies Fig. 3 zeigt. In diesem Fall braucht auch kein Wandrücksprung 16 am Innenzylinder 11 vorgesehen zu werden. Die nach innen gewölbten Bereiche 14b können hinsichtlich ihrer Abmessungen derart gestaltet werden, daß sie mit Spiel oder spielfrei am Gehäuse 1 des Stoßdämpfers 3 anliegen oder daß sie mit dem Gehäuse 1 eine Preßpassung bilden. Es können mindestens zwei, einander diametral gegenüberliegende, vorzugsweise aber drei oder mehr, gewölbte Bereiche 14b vorgesehen sein.

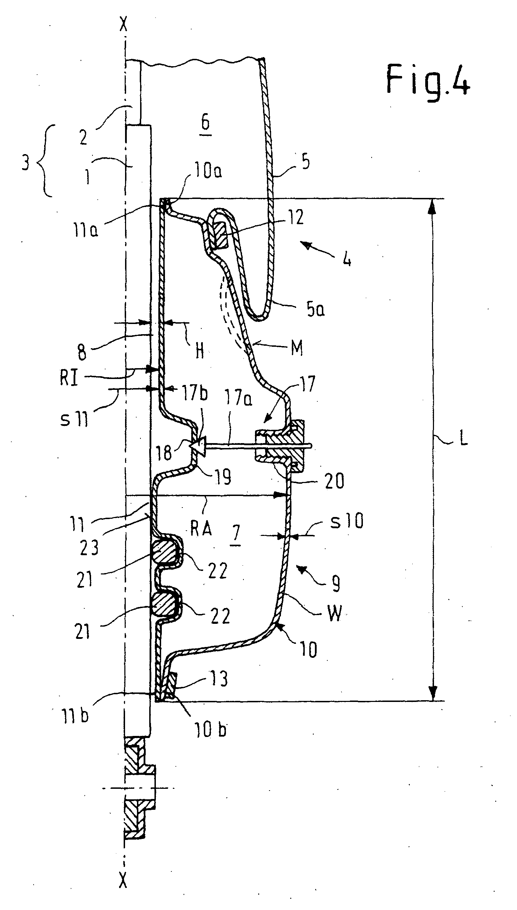

Fig. 4 zeigt, wie bereits erwähnt, eine weitere Ausführung der erfindungsgemäßen Anordnung. Wenn in einem Bereich unterhalb des Strömungskanals 8, der in dieser Figur mit dem Bezugszeichen 23 bezeichnet ist, ein Preßsitz zwischen dem Innenzylinder 11 des Hohlkörpers und dem Gehäuse 1 des Stoßdämpfers 3 vorgesehen wird, kann sogar ganz auf Distanzstücke 14, 14a verzichtet werden. Der Preßsitz kann dabei insbesondere durch eine umfangsgemäß verlaufende radial nach innen gerichtete Einschnürung 23 des Innenzylinders 11 gebildet sein.

Die beschriebene Ausführung des Hohlkörpers 9 und ihre Verwendung für eine Dämpferanordnung der eingangs beschriebenen Art besitzen eine eigenständige erfinderische Bedeutung.

### Bezugszeichen

- 1: Gehäuse von 3
- 2: Kolbenstange von 3
- 3: Stoßdämpfer
- 4: Luftfeder
- 5: Rollbalg von 4
- 5a: Rollfalte von 5
- 6: Arbeitsraum von 4
- 7: Zusatzvolumen
- 8: Strömungskanal
- 9: Hohlkörper
- 10: Außenzylinder von 9
- 10a, 10b: Enden von 10
- 11: Innenzylinder von 9
- 11 a, 11 b: Enden von 11
- 12, 13: Crimpringe
- 14: Distanzstück
- 15: Luftdurchtrittsöffnung in 14
- 16: Wandrücksprung von 11 für 14
- 17: Überströmventil
- 17a: Stößel von 17
- 17b: Ventilkegel von 17
- 18: Sitz für 17 in 11
- 19: Wölbung in 11 für 18
- 20: Wandstück in 10 zur Aufnahme von 17
- 21: Umfangsdichtung
- 22: Wellung in 11 für 21
- 23: Bereich der Einschnürung (Preßsitz zwischen 1 und 11)
- H: Höhe von 8
- L: Länge von 9
- M: Mantel von 10
- RA: Radius von 11
- RI: Radius von 10
- s10: Wandstärke von 10
- s11: Wandstärke von 11
- W: Wandung von 9
- X-X: Längsachse

## Patentansprüche

1. Dämpferanordnung, insbesondere Luftfederbein, umfassend einen ein im Wesentlichen zylindrisches Gehäuse (1) aufweisenden Stoßdämpfer (3) und eine Luftfeder (4) mit einem unter Innendruck stehenden Arbeitsraum (6) und umfassend ein Zusatzvolumen (7), das mit dem Arbeitsraum (6) über einen Strömungskanal (8) verbunden und von einem den Stoßdämpfer (3) umgebenden Hohlkörper (9) umschlossen ist, der aus einem Außenzylinder (10) und einem mit diesem verbundenen, insbesondere konzentrisch angeordneten, Innenzylinder (11) gebildet ist,
**dadurch gekennzeichnet, dass** das Zusatzvolumen (7) über den verschließbar ausgebildeten Strömungskanal (8) dem Arbeitsraum zuschaltbar ist, wobei der Außenzylinder (10) und/oder der Innenzylinder (11) des Hohlkörpers (9) aus metallischen Rohrstücken gebildet ist/sind, deren beidseitige Enden zur Bildung des Hohlkörpers (9) miteinander verbunden sind, und dass zwischen den Enden jeweils in der Wandung (W) des Außenzylinders (10) und/oder des Innenzylinders (11) durch Hydroformen oder Warmeinziehen mittels Rollieren über eine Länge (L) des Hohlkörpers (9) erzeugte variable Änderungen der Radien (R1, RA) zur Einstellung der Größte des Zusatz volumens (7) und zur Aufnahme, Lagerung, Halterung oder Ausbildung mindestens eines Distanzstücks (14, 14a), eines Überströmventils (17), eines Ventilsitzes (18), einer Umfangsdichtung (21) und/oder des Gehäuses (1) des Stoßdämpfers (3), wie am Außenzylinder (10) ein radial nach innen gerichtetes Wandstück (20), eine radial nach außen gerichtete nutartige Wellung (22), am Innenzylinder (11) ein radial nach innen gewölbter Bereich (14b), eine Einschnürung (23) und/oder ein radial nach außen gerichteter Wandrücksprung (16), ausgebildet sind.

2. Dämpferanordnung nach Anspruch 1,
**dadurch gekennzeichnet, daß** der Hohlkörper (9) form- und/oder kraftschlüssig am Gehäuse (1) des Stoßdämpfers (3) befestigt ist.

3. Dämpferanordnung nach einem der Anspruch 1 oder 2,
**dadurch gekennzeichnet, daß** der Arbeitsraum (6) der Luftfeder (4) den Stoßdämpfer (3) umgibt und daß der Hohlkörper (9) in axialer Richtung (X-X) des Stoßdämpfers (3) unterhalb des Arbeitsraumes (6) der Luftfeder (4) angeordnet ist.

4. Dämpferanordnung nach einem der Ansprüche 1 bis 3,
**dadurch gekennzeichnet, daß** die Luftfeder (4) eine als Rollbalg (5) ausgebildete biegsame Wand aufweist, die den unter Innendruck stehenden Arbeitsraum (6) begrenzt, wobei der Rollbalg (5) einendig am Außenzylinder (10) des Hohlkörpers (9) befestigt ist.

5. Dämpferanordnung nach einem der Ansprüche 1 bis 4,
**dadurch gekennzeichnet, daß** der Außenzylinder (10) des Hohlkörpers (9) eine insbesondere konisch verlaufende Gleitfläche für eine Rollfalte (5a) des Rollbalgs (5) bildet.

6. Dämpferanordnung nach einem der Ansprüche 1 bis 5,
**dadurch gekennzeichnet, daß** der Strömungskanal (8) durch einen Ringspalt zwischen dem Gehäuse (1) des Stoßdämpfers (3) und dem Innenzylinder (11) des Hohlkörpers (9) gebildet ist.

7. Dämpferanordnung nach einem der Ansprüche 1 bis 6,
**dadurch gekennzeichnet, daß** in einem Bereich (23) unterhalb des Strömungskanals (8) zwischen dem Gehäuse (1) des Stoßdämpfers (3) und dem Innenzylinder (11) des Hohlkörpers (9) ein Preßsitz ausgebildet ist.

8. Dämpferanordnung nach einem der Ansprüche 1 bis 7,
**dadurch gekennzeichnet, daß** im Strömungskanal (8) zwischen dem Gehäuse (1) des Stoßdämpfers (3) und dem Innenzylinder (11) des Hohlkörpers (9) mindestens ein Distanzstück (14) angeordnet ist.

9. Dämpferanordnung nach Anspruch 8,
**dadurch gekennzeichnet, daß** das Distanzstück (14) ringförmig ausgebildet ist und in axialer Richtung (X-X) verlaufende Luftdurchtrittsöffnungen (15) aufweist.

10. Dämpferanordnung nach einem der Ansprüche 1 bis 8,
**dadurch gekennzeichnet, daß** im Strömungskanal (8) zwischen dem Gehäuse (1) des Stoßdämpfers (3) und dem Innenzylinder (11) des Hohlkörpers (9) mehrere, als Ringsegmente ausgebildete Distanzstücke (14a) angeordnet sind.

11. Dämpferanordnung nach einem der Ansprüche 1 bis 10,
**dadurch gekennzeichnet, daß** der Innenzylinder (11) des Hohlkörpers (9) zur Bildung mindestens einer Halterung für (das/die) Distanzstück(e) (14, 14a) mindestens einen radial nach außen gerichteten nutartigen Wandrücksprung (16) aufweist.

12. Dämpferanordnung nach einem der Ansprüche 1 bis 8,
**dadurch gekennzeichnet, daß** am Innenzylinder (11) des Hohlkörpers (9) im Bereich des Strömungskanals (8) mindestens zwei, einander diametral gegenüberliegende, vorzugsweise aber drei oder mehr, sickenartige, radial nach innen gewölbte Bereiche (14b) ausgebildet sind.

13. Dämpferanordnung nach einem der Ansprüche 1 bis 12,
**dadurch gekennzeichnet, daß** der Innenzylinder (11) des Hohlkörpers (9) einen Ventilsitz (18) für ein Überströmventil (17) zum Verschließen des Strömungskanals (8) aufweist.

14. Dämpferanordnung nach einem der Ansprüche 1 bis 13,
**dadurch gekennzeichnet, daß** der Innenzylinder (11) des Hohlkörpers (9) zur Bildung eines/des Ventilsitzes (18) eine radial nach außen gerichtete Wölbung (19) aufweist.

15. Dämpferanordnung nach Anspruch 13 oder 14,
**dadurch gekennzeichnet, daß** das Überströmventil (17) einen Stößel (17a) aufweist, der den Hohlkörper (9), insbesondere in radialer Richtung, durchgreift und der im Außenzylinder (10) des Hohlkörpers (9) gelagert ist.

16. Dämpferanordnung nach einem der Ansprüche 13 bis 15,
**dadurch gekennzeichnet, daß**derAußenzylinder(10)des Hohlkörpers (9) zur Lagerung des Überströmventils (17), insbesondere seines Stößels (17a), eine Aufnahmeöffnung aufweist, die vorzugsweise von einem radial nach innen gerichteten Wandstück (20) des Außenzylinders (10) umgeben ist.

17. Dämpferanordnung nach einem der Ansprüche 1 bis 16,
**dadurch gekennzeichnet, daß** der Innenzylinder (11) des Hohlkörpers (9) zur Bildung mindestens einer Aufnahme für eine Umfangsdichtung (21) mindestens eine radial nach außen gerichtete nutartige Wellung (22) aufweist.

18. Dämpferanordnung nach einem der Ansprüche 1 bis 17,
**dadurch gekennzeichnet, daß** der Außenzylinder (10) und/oder der Innenzylinder (11) eine Wandstärke (s10, s11) von 0,5 mm bis 4,8 mm aufweist.

19. Hohlkörper (9), mit einer Wandung (W) zum Einschluss eines Zusatzvolumens (7) einer Dämpferanordnung, insbesondere eines Luftfederbeins, wobei die Dämpferanordnung einen ein im Wesentlichen zylindrisches Gehäuse (1) aufweisenden Stoßdämpfer (3) und eine Luftfeder (4) mit einem unter Innendruck stehenden Arbeitsraum (6) und das Zusatzvolumen (7) umfasst, das mit dem Arbeitsraum (6) über einen Strömungskanal (8) verbunden ist, und wobei die Wandung (W) einen Außenzylinder (10) und einen mit diesem verbundenen, insbesondere konzentrisch angeordneten, Innenzylinder (11) umfasst, welcher dazu bestimmt ist, das Gehäuse (1) des Stoßdämpfers (3) der Dämpferanordnung zu umgeben,
**dadurch gekennzeichnet, dass** der Außenzylinder (10) und/oder der Innenzylinder (11) des Hohlkörpers (9) aus metallischen Rohrstücken gebildet ist/sind, deren beidseitige Enden zur Bildung des Hohlkörpers (9) miteinander verbunden sind, und dass zwischen den Enden jeweils in der Wandung (W) des Außenzylinders (10) und/oder des Innenzylinders (11) durch Hydroformen oder Warmeinziehen mittels Rollieren über eine Länge (L) des Hohlkörpers (9) erzeugte variable Änderungen der Radien (R1, RA) zur Einstellung der Größte des Zusatzvolumens (7) und in Form von am Außenzylinder (10) und/oder am Innenzylinder (11) ausgebildeten radial nach innen oder außen gerichteten gewölbten Bereichen (14b), Wandstücken (20), Wandrücksprüngen (16), Einschnürungen (23) und/oder Wellungen (22), ausgebildet sind.

20. Hohlkörper nach Anspruch 19,
**dadurch gekennzeichnet, daß** der Außenzylinder (10) und/oder der Innenzylinder (11) durch Hydroformen oder durch Warmeinziehen mittels Rollieren von metallischen Rohrstücken gebildet ist.

21. Hohlkörper nach Anspruch 19 oder 20,
**dadurch gekennzeichnet, daß** die axialen, insbesondere rohrförmigen, Enden (10a, 10b, 11a, 11b) des Außenzylinders (10) und des Innenzylinders (11) miteinander verbunden, insbesondere kraft- und/oder stoffschlüssig miteinander verbunden, sind.

22. Hohlkörper nach einem der Ansprüche 19 bis 21,
**dadurch gekennzeichnet, daß** der Außenzylinder (10) einendig an einem Rollbalg (5) der Luftfeder (4) befestigbar ist, wobei der Rollbalg (5) durch eine biegsame Wand der Luftfeder (4) gebildet ist.

23. Hohlkörper nach Anspruch 22,
**dadurch gekennzeichnet, daß** der Außenzylinder (10) eine insbesondere konisch verlaufende Gleitfläche für eine Rollfalte (5a) des Rollbalgs (5) bildet.

24. Hohlkörper nach einem der Ansprüche 19 bis 23,
**dadurch gekennzeichnet, daß** der Innenzylinder (11) zur Bildung mindestens einer Halterung für ein oder mehrere, in dem Strömungskanal (8) zwischen dem Gehäuse (1) des Stoßdämpfers (3) und dem Innenzylinder (11) angeordnete Distanzstücke (14, 14) mindestens einen radial nach außen gerichteten nutartigen Wandrücksprung (16) aufweist.

25. Hohlkörper nach einem der Ansprüche 19 bis 24, insbesondere nach Anspruch 24,
**dadurch gekennzeichnet, daß** am Innenzylinder (11) mindestens zwei einander diametral gegenüberliegende, sickenartige, radial nach innen gewölbte Bereiche (14b) ausgebildet sind.

26. Hohlkörper nach einem der Ansprüche 19 bis 25, insbesondere nach Anspruch 24 oder 25,
**dadurch gekennzeichnet, daß** am Innenzylinder (11) im Bereich des Strömungskanals (8) drei oder mehr sickenartige, radial nach innen gewölbte Bereiche (14b) ausgebildet sind.

27. Hohlkörper nach einem der Ansprüche 19 bis 26,
**dadurch gekennzeichnet, daß** der Innenzylinder (11) einen Ventilsitz (18) für ein Überströmventil (17) zum Verschließen des Strömungskanals (8) aufweist.

28. Hohlkörper nach einem der Ansprüche 19 bis 27,
**dadurch gekennzeichnet, daß** der Innenzylinder (11) zur Bildung eines/des Ventilsitzes (18) eine radial nach außen gerichtete Wölbung (19) aufweist.

29. Hohlkörper nach einem der Ansprüche 19 bis 28,
**dadurch gekennzeichnet, daß**derAußenzylinder(10)zur Lagerung eines Überströmventils (17), insbesondere eines Stößels (17a) eines Überströmventils (17), eine Aufnahmeöffnung aufweist, die vorzugsweise von einem radial nach innen gerichteten Wandstück (20) des Außenzylinders (10) umgeben ist.

30. Hohlkörper nach einem der Ansprüche 19 bis 29,
**dadurch gekennzeichnet, daß** der Innenzylinder (11) zur Bildung mindestens einer Aufnahme für eine Umfangsdichtung (21) mindestens eine radial nach außen gerichtete nutartige Wellung (22) aufweist.

31. Hohlkörper nach einem der Ansprüche 19 bis 30,
**dadurch gekennzeichnet, daß** der Außenzylinder (10) und/oder der Innenzylinder (11) eine Wandstärke (s10, s11) von 0,5 mm bis 4,8 mm aufweist.

32. Verwendung eines Hohlkörpers nach einem der Ansprüche 19 bis 31,
**dadurch gekennzeichnet, daß** das eingeschlossene Zusatzvolumen (7) Bestandteil einer Dämpferanordnung, insbesondere eines Luftfederbeins, ist, wobei die Dämpferanordnung einen ein im Wesentlichen zylindrisches Gehäuse (1) aufweisenden Stoßdämpfer (3) und eine Luftfeder (4) mit einem unter Innendruck stehenden Arbeitsraum (6) und das Zusatzvolumen (7) umfaßt, das dem Arbeitsraum (6) über einen verschließbaren Strömungskanal (8) zuschaltbar ist, wobei das Zusatzvolumen (7) von dem den Stoßdämpfer (3) umgebenden Hohlkörper (9) umschlossen ist.

## Claims

1. A damper arrangement, in particular an air spring strut, comprising a shock absorber (3) having an essentially cylindrical housing (1) and an air spring (4) with a working space (6) which is under internal pressure, and comprising an additional volume (7) which is connected to the working space (6) via a flow duct (8) and is enclosed by a hollow body (9) which surrounds the shock absorber (3) and is formed from an outer cylinder (10) and an inner cylinder (11), which is connected to the said outer cylinder and, in particular, is arranged concentrically,
**characterised in that** the additional volume (7) may be connected to the working space via the flow duct (8) which is designed so as to be closable, wherein the outer cylinder (10) and/or the inner cylinder (11) of the hollow body (9) is/are formed from metallic pipe lengths, the two ends of which are connected to one another to form the hollow body (9), and **in that**, between the ends, in each case in the wall (W) of the outer cylinder (10) and/or of the inner cylinder (11), variable changes of the radii (RI, RA), produced by hydroforming or a hot drawing-in process by means of rolling over a length (L) of the hollow body (9), are formed in order to adjust the size of the additional volume (7) and to receive, mount, hold or form at least one spacer (14, 14a), an overflow valve (17), a valve seat (18), a circumferential seal (21) and/or the housing (1) of the shock absorber (3), such as, on the outer cylinder (10), a radially inwardly directed wall section (20), a radially outwardly directed, groove-like corrugation (22) and, on the inner cylinder (11), a radially inwardly curved region (14b), a constriction (23) and/or a radially outwardly directed wall recess (16).

2. The damper arrangement as claimed in Claim 1,
**characterised in that** the hollow body (9) is fastened to the housing (1) of the shock absorber (3) with a form fit and/or frictionally.

3. The damper arrangement as claimed in one of Claims 1 or 2,
**characterised in that** the working space (6) of the air spring (4) surrounds the shock absorber (3) and **in that** the hollow body (9) is arranged in the axial direction (X-X) of the shock absorber (3) below the working space (6) of the air spring (4).

4. The damper arrangement as claimed in one of Claims 1 to 3,
**characterised in that** the air spring (4) has a flexible wall which is designed as a rolling bellows (5) and bounds the working space (6) which is under internal pressure, the rolling bellows (5) being fastened at one end to the outer cylinder (10) of the hollow body (9).

5. The damper arrangement as claimed in one of Claims 1 to 4,
**characterised in that** the outer cylinder (10) of the hollow body (9) forms a sliding surface, in particular running conically, for a rolling fold (5a) of the rolling bellows (5).

6. The damper arrangement as claimed in one of Claims 1 to 5,
**characterised in that** the flow duct (8) is formed by an annular gap between the housing (1) of the shock absorber (3) and the inner cylinder (11) of the hollow body (9).

7. The damper arrangement as claimed in one of Claims 1 to 6,
**characterised in that** a press fit is formed in a region (23) below the flow duct (8) between the housing (1) of the shock absorber (3) and the inner cylinder (11) of the hollow body (9).

8. The damper arrangement as claimed in one of Claims 1 to 7,
**characterised in that** at least one spacer (14) is arranged in the flow duct (8) between the housing (1) of the shock absorber (3) and the inner cylinder (11) of the hollow body (9).

9. The damper arrangement as claimed in Claim 8,
**characterised in that** the spacer (14) is of annular design and has air passage openings (15) running in the axial direction (X-X).

10. The damper arrangement as claimed in one of Claims 1 to 8,
**characterised in that** a plurality of spacers (14a) designed as ring segments are arranged in the flow duct (8) between the housing (1) of the shock absorber (3) and the inner cylinder (11) of the hollow body (9).

11. The damper arrangement as claimed in one of Claims 1 to 10,
**characterised in that** the inner cylinder (11) of the hollow body (9) has at least one radially outwardly directed, groove-like wall recess (16) in order to form at least one mount for the spacer (spacers) (14, 14a).

12. The damper arrangement as claimed in one of Claims 1 to 8,
**characterised in that** at least two diametrically opposite, but preferably three or more bead-like, radially inwardly curved regions (14b) are formed on the inner cylinder (11) of the hollow body (9) in the region of the flow duct (8).

13. The damper arrangement as claimed in one of Claims 1 to 12,
**characterised in that** the inner cylinder (11) of the hollow body (9) has a valve seat (18) for an overflow valve (17) for closing the flow duct (8).

14. The damper arrangement as claimed in one of Claims 1 to 13,
**characterised in that** the inner cylinder (11) of the hollow body (9) has a radially outwardly directed curvature (19) in order to form a/the valve seat (18).

15. The damper arrangement as claimed in Claim 13 or 14,
**characterised in that** the overflow valve (17) has a tappet (17a) which reaches through the hollow body (9), in particular in the radial direction, and which is mounted in the outer cylinder (10) of the hollow body (9).

16. The damper arrangement as claimed in one of Claims 13 to 15,
**characterised in that** the outer cylinder (10) of the hollow body (9) has, for the mounting of the overflow valve (17), in particular its tappet (17a), a receiving opening which is preferably surrounded by a radially inwardly directed wall section (20) of the outer cylinder (10).

17. The damper arrangement as claimed in one of Claims 1 to 16,
**characterised in that** the inner cylinder (11) of the hollow body (9) has at least one radially outwardly directed, groove-like corrugation (22) in order to form at least one holder for a circumferential seal (21).

18. The damper arrangement as claimed in one of Claims 1 to 17,
**characterised in that** the outer cylinder (10) and/or the inner cylinder (11) has a wall thickness (s10, s11) of 0.5 mm to 4.8 mm.

19. A hollow body (9), having a wall (W) for the enclosure of an additional volume (7) of a damper arrangement, in particular an air spring strut, the damper arrangement comprising a shock absorber (3) having an essentially cylindrical housing (1) and an air spring (4) with a working space (6) which is under internal pressure, and the additional volume (7) which is connected to the working space (6) via a flow duct (8), and the wall (W) comprising an outer cylinder (10) and an inner cylinder (11), which is connected to the said outer cylinder, and, in particular, is arranged concentrically, the said inner cylinder being intended for surrounding the housing (1) of the shock absorber (3) of the damper arrangement,
**characterised in that** the outer cylinder (10) and/or the inner cylinder (11) of the hollow body (9) is/are formed from metallic pipe lengths, the two ends of which are connected to one another to form the hollow body (9), and **in that**, between the ends, in each case in the wall (W) of the outer cylinder (10) and/or of the inner cylinder (11), variable changes of the radii (RI, RA), produced by hydroforming or a hot drawing-in process by means of rolling over a length (L) of the hollow body (9), are formed in order to adjust the size of the additional volume (7) and are in the form of radially inwardly or outwardly directed, curved regions (14b), wall sections (20), wall recesses (16), constrictions (23) and/or corrugations (22) formed on the outer cylinder (10) and/or on the inner cylinder (11).

20. The hollow body as claimed in Claim 19,
**characterised in that** the outer cylinder (10) and/or the inner cylinder (11) is/are formed by hydroforming or by a hot drawing-in process by means of rolling metallic pipe lengths.

21. The hollow body as claimed in Claim 19 or 20,
**characterised in that** the axial, in particular tubular, ends (10a, 10b, 11a, 11b) of the outer cylinder (10) and of the inner cylinder (11) are connected to one another, in particular are connected to one another frictionally and/or with a cohesive material j oint.

22. The hollow body as claimed in one of Claims 19 to 21,
**characterised in that** the outer cylinder (10) can be fastened at one end to a rolling bellows (5) of the air spring (4), the rolling bellows (5) being formed by a flexible wall of the air spring (4).

23. The hollow body as claimed in Claim 22,
**characterised in that** the outer cylinder (10) forms a sliding surface, in particular running conically, for a rolling fold (5a) of the rolling bellows (5).

24. The hollow body as claimed in one of Claims 19 to 23,
**characterised in that** the inner cylinder (11) has at least one radially outwardly directed, groove-like wall recess (16) in order to form at least one mount for one or more spacers (14, 14) arranged in the flow duct (8) between the housing (1) of the shock absorber (3) and the inner cylinder (11).

25. The hollow body as claimed in one of Claims 19 to 24, in particular as claimed in Claim 24,
**characterised in that** at least two diametrically opposite, bead-like, radially inwardly curved regions (14b) are formed on the inner cylinder (11).

26. The hollow body as claimed in one of Claims 19 to 25, in particular as claimed in Claim 24 or 25,
**characterised in that** three or more bead-like, radially inwardly curved regions (14b) are formed on the inner cylinder (11) in the region of the flow duct (8).

27. The hollow body as claimed in one of Claims 19 to 26,
**characterised in that** the inner cylinder (11) has a valve seat (18) for an overflow valve (17) for closing the flow duct (8).

28. The hollow body as claimed in one of Claims 19 to 27,
**characterised in that** the inner cylinder (11) has a radially outwardly directed curvature (19) in order to form a/the valve seat (18).

29. The hollow body as claimed in one of Claims 19 to 28,
**characterised in that** the outer cylinder (10) has, for the mounting of an overflow valve (17), in particular a tappet (17a) of an overflow valve (17), a receiving opening which is preferably surrounded by a radially inwardly directed wall section (20) of the outer cylinder (10).

30. The hollow body as claimed in one of Claims 19 to 29,
**characterised in that** the inner cylinder (11) has at least one radially outwardly directed, groove-like corrugation (22), in order to form at least one holder for a circumferential seal (21).

31. The hollow body as claimed in one of Claims 19 to 30,
**characterised in that** the outer cylinder (10) and/or the inner cylinder (11) has/have a wall thickness (s10, s11) of 0.5 mm to 4.8 mm.

32. The use of a hollow body as claimed in one of Claims 19 to 31,
**characterised in that** the enclosed additional volume (7) is part of a damper arrangement, in particular of an air spring strut, the damper arrangement comprising a shock absorber (3) having an essentially cylindrical housing (1) and an air spring (4) with a working space (6) which is under internal pressure, and the additional volume (7) which can be connected to the working space (6) via a closable flow duct (8), the additional volume (7) being enclosed by the hollow body (9) surrounding the shock absorber (3).

## Revendications

1. Dispositif amortisseur, en particulier jambe à coussin d'air, comprenant un amortisseur (3) présentant un boîtier (1) sensiblement cylindrique et un coussin d'air (4) avec un espace de travail (6) mis sous pression intérieure et comprenant un volume supplémentaire (7), qui est relié à l'espace de travail (6) par un canal d'écoulement (8) et est entouré d'un corps creux (9) entourant l'amortisseur (3), lequel corps est formé d'un cylindre extérieur (10) et d'un cylindre intérieur (11), relié à ce cylindre et disposé en particulier de façon concentrique,
**caractérisé en ce que** le volume supplémentaire (7) peut être mis en circuit avec l'espace de travail au moyen du canal d'écoulement (8) conçu de façon à pouvoir fermer, le cylindre extérieur (10) et/ou le cylindre intérieur (11) du corps creux (9) étant formé(s) de bouts de tuyau métalliques, dont les extrémités des deux côtés sont reliées entre elles pour former le corps creux (9), et **en ce qu'**entre les extrémités respectives dans la paroi (W) du cylindre extérieur (10) et/ou du cylindre intérieur (11) sont réalisées des modifications variables des rayons (RI, RA), générées par hydroformage ou retrait à chaud par roulement sur une longueur (L) du corps creux (9) pour le réglage de la grandeur du volume supplémentaire (7) et pour le logement, le montage, la fixation ou la réalisation d'au moins une pièce d'espacement (14, 14a) d'une soupape de décharge (17), d'un siège de soupape (18), d'un joint périphérique (21) et/ou du boîtier (1) de l'amortisseur (3), comme sur le cylindre extérieur (10) une pièce de paroi (20) dirigée radialement vers l'intérieur, une ondulation (22) de type rainure dirigée radialement vers l'extérieur, sur le cylindre intérieur (11) une zone (14b) courbée radialement vers l'intérieur, un rétrécissement (23) et/ou un retrait de paroi (16) dirigé radialement vers l'extérieur.

2. Dispositif amortisseur selon la revendication 1,
**caractérisé en ce que** le corps creux (9) est fixé par complémentarité de formes et/ou par adhérence sur le boîtier (1) de l'amortisseur (3).

3. Dispositif amortisseur selon l'une quelconque des revendications 1 ou 2,
**caractérisé en ce que** l'espace de travail (6) du coussin d'air (4) entoure l'amortisseur (3) et le corps creux (9) est disposé dans le sens axial (X-X) de l'amortisseur (3) au-dessous de l'espace de travail (6) du coussin d'air (4).

4. Dispositif amortisseur selon l'une quelconque des revendications 1 à 3,
**caractérisé en ce que** le coussin d'air (4) présente une paroi flexible conçue comme soufflet pliant (5), qui délimite l'espace de travail (6) mis sous pression intérieure, le soufflet pliant (5) étant fixé par une extrémité sur le cylindre extérieur (10) du corps creux (9).

5. Dispositif amortisseur selon l'une quelconque des revendications 1 à 4,
**caractérisé en ce que** le cylindre extérieur (10) du corps creux (9) forme une surface de glissement agencée en particulier de façon conique pour un pli (5a) du soufflet pliant (5).

6. Dispositif amortisseur selon l'une quelconque des revendications 1 à 5,
**caractérisé en ce que** le canal d'écoulement (8) est formé par une fente annulaire entre le boîtier (1) de l'amortisseur (3) et le cylindre intérieur (11) du corps creux (9).

7. Dispositif amortisseur selon l'une quelconque des revendications 1 à 6,
**caractérisé en ce qu'**un siège ajusté est réalisé dans une zone (23) au-dessous du canal d'écoulement (8) entre le boîtier (1) de l'amortisseur (3) et le cylindre intérieur (11) du corps creux (9).

8. Dispositif amortisseur selon l'une quelconque des revendications 1 à 7,
**caractérisé en ce qu'**au moins une pièce d'espacement (14) est disposée dans le canal d'écoulement (8) entre le boîtier (1) de l'amortisseur (3) et le cylindre intérieur (11) du corps creux (9).

9. Dispositif amortisseur selon la revendication 8,
**caractérisé en ce que** la pièce d'espacement (14) est réalisée en forme de bague et présente des ouvertures de passage d'air (15) agencées dans le sens axial (X-X).

10. Dispositif amortisseur selon l'une quelconque des revendications 1 à 8,
**caractérisé en ce que** plusieurs pièces d'espacement (14a) conçues comme des segments annulaires sont disposées dans le canal d'écoulement (8) entre le boîtier (1) de l'amortisseur (3) et le cylindre intérieur (11) du corps creux (9).

11. Dispositif amortisseur selon l'une quelconque des revendications 1 à 10,
**caractérisé en ce que** le cylindre intérieur (11) du corps creux (9) présente au moins un retrait de paroi (16), de type rainure, dirigé radialement vers l'extérieur, pour la formation d'au moins une fixation pour la/les pièce(s) d'espacement (14, 14a).

12. Dispositif amortisseur selon l'une quelconque des revendications 1 à 8,
**caractérisé en ce que** sur le cylindre intérieur (11) du corps creux (9), dans la zone du canal d'écoulement (8), sont réalisées au moins deux zones diamétralement opposées, mais de préférence trois zones (14b) ou plus en forme de moulure, dirigées radialement vers l'intérieur.

13. Dispositif amortisseur selon l'une quelconque des revendications 1 à 12,
**caractérisé en ce que** le cylindre intérieur (11) du corps creux (9) présente un siège de soupape (18) pour une soupape de décharge (17) pour la fermeture du canal d'écoulement (8).

14. Dispositif amortisseur selon l'une quelconque des revendications 1 à 13,
**caractérisé en ce que** le cylindre intérieur (11) du corps creux (9) présente une courbure (19) dirigée radialement vers l'extérieur pour la formation d'un/du siège de soupape (18).

15. Dispositif amortisseur selon la revendication 13 ou 14,
**caractérisé en ce que** la soupape de décharge (17) présente un coulisseau (17a) qui traverse le corps creux (9), en particulier dans la direction radiale, et qui est incliné dans le cylindre extérieur (10) du corps creux (9).

16. Dispositif amortisseur selon l'une quelconque des revendications 13 à 15,
**caractérisé en ce que** le cylindre extérieur (10) du corps creux (9) présente pour la fixation de la soupape de décharge (17), en particulier de son coulisseau (17a), une ouverture de logement qui est entourée de préférence d'une pièce de paroi (20), dirigée radialement vers l'intérieur, du cylindre extérieur (10).

17. Dispositif amortisseur selon l'une quelconque des revendications 1 à 16,
**caractérisé en ce que** le cylindre intérieur (11) du corps creux (9) présente au moins une ondulation (22) de type rainure, orientée radialement vers l'extérieur, pour former au moins un logement pour un joint périphérique (21).

18. Dispositif amortisseur selon l'une quelconque des revendications 1 à 17,
**caractérisé en ce que** le cylindre extérieur (10) et/ou le cylindre intérieur (11) présente(nt) une épaisseur de paroi (s 10, s11) de 0,5 mm jusqu'à 4,8 mm.

19. Corps creux (9), comprenant une paroi (W) pour l'inclusion d'un volume supplémentaire (7) d'un dispositif amortisseur, en particulier d'une jambe à coussin d'air, le dispositif amortisseur comportant un amortisseur (3) présentant un boîtier (1) sensiblement cylindrique et un coussin d'air (4) avec un espace de travail (6) mis sous pression intérieure et le volume supplémentaire (7), qui est relié à l'espace de travail (6) au moyen d'un canal d'écoulement (8), et la paroi (W) comportant un cylindre extérieur (10) et un cylindre intérieur (11), relié au premier cylindre, en particulier disposé de façon concentrique, qui est destiné à entourer le boîtier (1) de l'amortisseur (3) de l'agencement d'amortisseur,
**caractérisé en ce que** le cylindre extérieur (10) et/ou le cylindre intérieur (11) du corps creux (9) est/sont formés à base de pièces de tuyau métalliques, dont les extrémités des deux côtés sont reliées entre elles pour former le corps creux (9), et **en ce que** entre les extrémités, à chaque fois dans la paroi (W) du cylindre extérieur (10) et/ou du cylindre intérieur (11) sont réalisées des modifications variables des rayons (RI, RA), générées par hydroformage ou retrait à chaud par roulement sur une longueur (L) du corps creux (9) pour le réglage de la grandeur du volume supplémentaire (7) et sous forme de zones (14b), incurvées, dirigées radialement vers l'intérieur ou l'extérieur, réalisées sur le cylindre extérieur (10) et/ou sur le cylindre intérieur (11), de pièces de paroi (20), de retraits de paroi (16), de rétrécissements (23) et/ou d'ondulations (22).

20. Corps creux selon la revendication 19,
**caractérisé en ce que** le cylindre extérieur (10) et/ou le cylindre intérieur (11) est/sont formé(s) par hydroformage ou retrait à chaud au moyen de roulement de bouts de tuyau métalliques.

21. Corps creux selon la revendication 19 ou 20,
**caractérisé en ce que** les extrémités (10a, 10b, 11a, 11b) axiales, en particulier tubulaires, du cylindre extérieur (10) et du cylindre intérieur (11) sont reliées entre elles, en particulier sont reliées entre elles par adhérence et/ou par adhésion de matériau.

22. Corps creux selon l'une quelconque des revendications 19 à 21,
**caractérisé en ce que** le cylindre extérieur (10) peut être fixé par une extrémité sur un soufflet pliant (5) du coussin d'air (4), le soufflet pliant (5) étant formé par une paroi flexible du coussin d'air (4).

23. Corps creux selon la revendication 22,
**caractérisé en ce que** le cylindre extérieur (10) forme une surface de glissement agencée en particulier en forme de cône pour un pli (5a) du soufflet pliant (5).

24. Corps creux selon l'une quelconque des revendications 19 à 23,
**caractérisé en ce que** le cylindre intérieur (11) présente au moins un retrait de paroi (16) de type rainure, dirigé radialement vers l'extérieur, pour la formation d'au moins une fixation pour une ou plusieurs pièces d'espacement (14, 14), disposées dans le canal d'écoulement (8) entre le boîtier (1) de l'amortisseur (3) et le cylindre intérieur (11).

25. Corps creux selon l'une quelconque des revendications 19 à 24, en particulier selon la revendication 24,
**caractérisé en ce que** sur le cylindre intérieur (11) sont réalisées au moins deux zones (14b) diamétralement opposées, en forme de moulure, incurvées radialement vers l'intérieur.

26. Corps creux selon l'une quelconque des revendications 19 à 25, en particulier selon la revendication 24 ou 25,
**caractérisé en ce que** sur le cylindre intérieur (11) sont réalisées dans la zone du canal d'écoulement (8) trois ou plus de trois zones (14b) de type moulure, incurvées radialement vers l'intérieur.

27. Corps creux selon l'une quelconque des revendications 19 à 26,
**caractérisé en ce que** le cylindre intérieur (11) présente un siège de soupape (18) pour une soupape de décharge (17) pour la fermeture du canal d'écoulement (8).

28. Corps creux selon l'une quelconque des revendications 19 à 27,
**caractérisé en ce que** le cylindre intérieur (11) présente une courbure (19) dirigée radialement vers l'extérieur pour former un/le siège de soupape (18).

29. Corps creux selon l'une quelconque des revendications 19 à 28
**caractérisé en ce que**, pour la fixation d'une soupape de décharge (17), en particulier d'un coulisseau (17a) d'une soupape de décharge (17), le cylindre extérieur (10) présente une ouverture de logement qui est entourée de préférence d'une pièce de paroi (20), dirigée radialement vers l'intérieur, du cylindre extérieur (10).

30. Corps creux selon l'une quelconque des revendications 19 à 29,
**caractérisé en ce que** le cylindre intérieur (11) présente au moins une ondulation (22) de type rainure, dirigée radialement vers l'extérieur, pour la formation d'au moins un logement pour un joint périphérique (21).

31. Corps creux selon l'une quelconque des revendications 19 à 30,
**caractérisé en ce que** le cylindre extérieur (10) et/ou le cylindre intérieur (11) présente(nt) une épaisseur de paroi (s10, s11) de 0,5 mm à 4,8 mm.

32. Utilisation d'un corps creux selon l'une quelconque des revendications 19 à 31,
**caractérisé en ce que** le volume supplémentaire (7) enfermé fait partie d'un dispositif amortisseur, en particulier d'une jambe à coussin d'air, le dispositif amortisseur comportant un amortisseur (3) présentant un boîtier (1) sensiblement cylindrique et un coussin d'air (4) avec un espace de travail (6) exposé à la pression intérieure et le volume supplémentaire (7), lequel peut être mis en circuit avec l'espace de travail (6) au moyen d'un canal d'écoulement (8) pouvant fermer, le volume supplémentaire (7) étant entouré du corps creux (9) entourant l'amortisseur (3).
